Europäisches Patentamt

European Patent Office

Office européen des brevets

(11) Veröffentlichungsnummer: **0 328 035**
**A2**

# (12) EUROPÄISCHE PATENTANMELDUNG

(21) Anmeldenummer: 89102057.0

(22) Anmeldetag: 07.02.89

(51) Int. Cl.⁴: **C02F 1/78**

(30) Priorität: 11.02.88 DE 3804173
13.10.88 DE 3834834

(43) Veröffentlichungstag der Anmeldung:
**16.08.89 Patentblatt 89/33**

(84) Benannte Vertragsstaaten:
**AT CH DE FR IT LI NL SE**

(71) Anmelder: **GÜTLING GMBH**
**Erich-Herion-Strasse 6**
**D-7012 Fellbach(DE)**

(72) Erfinder: **Ernst, Oswald**
**Anne-Frank Weg 7**
**D-7300 Esslingen(DE)**
Erfinder: **Gütling, Walter, Dipl.-Ing.**
**Alter Neustädter Weg 67**
**D-7050 Waiblingen(DE)**

(74) Vertreter: **Patentanwälte Kohler - Schwindling**
**- Späth**
**Hohentwielstrasse 41**
**D-7000 Stuttgart 1(DE)**

(54) **Anordnung zur Behandlung von Industrieabwässern.**

(57) Die Erfindung bezieht sich auf eine Anordnung zur Behandlung von Industrieabwässern mit einem gasförmigen Medium, vorzugsweise mit Ozon, in einem Behälter. Es soll die Wirksamkeit der Behandlung verbessert werden.

Die Erfindung besteht darin, daß eine geringe Menge Tensid zudosiert wird und/oder eine Pumpenanordnung mit Seitenkanal, beispielsweise eine Seitenkanalpumpe (13), einen Teilstrom (14, 15) des Abwassers in der Nähe des am oberen Behälterende befindlichen Abwassereinlaufes (5) entnimmt und in der Nähe seines am unteren Behälterende befindlichen Abwasserauslaufes (16) wieder zuführt und daß auf der Ansaugseite der Seitenkanalpumpe (13) das Behandlungsgas zugeführt wird.

Fig. 3

## Anordnung zur Behandlung von Industrieabwässern

Die Erfindung bezieht sich auf eine Anordnung zur Behandlung von Industrieabwässern mit einem gasförmigen Medium, vorzugsweise Ozon, bei dem in einem Behälter das Abwasser und das Behandlungsgas im Gegenstrom zueinander geführt sind.

Bei bekannten Anlagen dieser Art besteht das Problem, das gasförmige Behandlungsmedium in möglichst kleine Gasbläschen zu zerteilen, damit eine große Reaktionsoberfläche zwischen dem gasförmigen Medium und dem Abwasser hergestellt wird. Man hat daher versucht, dieses Behandlungsgas durch im Behandlungsraum angeordnete poröse Platten hindurchzuführen und hierdurch fein zu verteilen. Die hierdurch erhaltenen Gasblasen sind jedoch nicht klein genug.

Bei anderen bekannten Anordnungen zu diesem Zweck werden Rührwerke im Behandlungsraum angeordnet, die das eingeführte Behandlungsgas möglichst fein verteilen sollen. Mit diesen Rührwerken wird jedoch nicht die feine Verteilung des Behandlungsgases erzielt, die für eine möglichst große Reaktionsoberfläche des Behandlungsgases erforderlich ist.

Der Erfindung liegt daher die Aufgabe zugrunde, ein Behandlungsgas dem Behälter in möglichst fein verteilter Form zuzuführen.

Diese Aufgabe wird gemäß der Erfindung dadurch gelöst, daß eine Vorrichtung vorgesehen ist, die dem Abwasser eine geringe, vorzugsweise im Bereich von einigen ppm liegende Menge, beispielsweise 2 - 10 mg pro Liter Abwasser an Tensiden zudosiert.

Ein geeignetes Tensid für diesen Zweck kann beispielsweise eine Polyalkylenoxyd sein, das wie ein Blockpolymerisat hergestellt wird. Derartige Tenside haben sowohl antischäumende als auch despergierende Eigenschaften und sind daher für diesen Zweck besonders geeignet. An sich würde ein Zusatz einer größeren Menge Tensid zum Abwasser den Ozonverbrauch erheblich vergrößern, da ja das Tensid mit dem Ozon reagiert und daher der Ozonverbrauch steigen müßte. Im vorliegenden Falle wird jedoch so wenig Tensid zugesetzt, daß eine Reaktion mit dem Ozon vernachlässigbar klein ist. Bevor das Tensid mit dem Ozon reagiert und daher verbraucht wird, bewirkt es eine sehr starke Verkleinerung der Blasen des Behandlungsgases und eine sehr homogene Verteilung der Gasblasen in dem Behälter und daher eine besonders große reaktionsaktive Oberfläche. Dieser Zusatz von wenig Tensid hat den großen Vorteil, daß der Weg, den das Behandlungsgas durch das Abwasser zurücklegen muß, um die Schadstoffe im Abwasser zu oxidieren, sehr viel kleiner sein muß als ohne den Zusatz von Tensid. Beispielsweise können die Behälter, in denen die Abwasserbehandlung vorgenommen wird, wesentlich niedriger, zum Beispiel nur 1/5 so hoch gebaut werden als ohne diesen Zusatz.

Die Erfindungsaufgabe kann aber auch dadurch gelöst werden, daß eine Pumpenanordnung einen Teilstrom des Abwassers in der Nähe des am oberen Behälterende befindlichen Abwassereinlaufes entnimmt und in der Nähe seines am unteren Behälterende befindlichen Abwasserauslaufes wieder zuführt und daß die Pumpenanordnung eine Seitenkanalpumpe aufweist, an deren Ansaugseite das Behandlungsgas zugeführt wird.

Bei einer einen Seitenkanal aufweisenden Pumpenanordnung bildet der Seitenkanal eine Art Saugstutzen. Das hier zugeführte Behandlungsgas erfährt infolge der Saugwirkung eine Expansion, die eine sehr feine Verteilung des Behandlungsgases im Abwasserstrom zur Folge hat. Am Austritt der Pumpe findet eine Kompression und am Eintritt in den Behälter wiederum eine Expansion statt. Durch diese Wechsel zwischen Expansion und Kompression wird die feine Verteilung des Gases weiterhin gefördert.

Ein weiterer Vorteil der Erfindung besteht darin, daß die feine Verteilung des Behandlungsgases in einem Teilstrom stattfindet. Insbesondere dann, wenn sich der Abwassereinlauf in der Nähe des oberen Behälterendes und der Abwasserauslauf in der Nähe des unteren Behälters befindet, also das im Behälter aufstei gende Behandlungsgas im Gegenstrom zu dem Strom des Abwassers verläuft, ergibt sich ein sehr guter Wirkungsgrad bei der Behandlung des Abwassers durch das Behandlungsgas.

Bei der nach der Erfindung verwendeten Seitenkanalpumpen, wie sie beispielsweise im "Lexikon der Technik" von Lueger, Bd. 7, S. 294 beschrieben ist, findet in dem Seitenkanal eine sehr gute Durchwirbelung statt. Außerdem hat die Seitenkanalpumpe noch den Vorteil, daß sie auch dann das an der Ansaugseite dieser Pumpe angeschlossene Medium ansaugt, wenn sich in der Ansaugleitung Gasblasen befinden.

Zwar ist aus der DE-OS 28 27 151 eine Vorrichtung bekannt geworden, bei der aus einer Leitung, die das zu behandelnde Abwasser führt, ein Teilstrom entnommen wird, der oben in eine Füllkörperkolonne eingeführt wird. Von diesem Teilstrom wird wiederum ein Teilstrom abgezweigt, in dem ein Wasserstrahl-Gasverdichter angeordnet ist, der ein Ozon-Sauerstoff-Gemisch ansaugt und mit dem Teilstrom vermischt, wonach dieses Gemisch aus Wasser, Ozon und Sauerstoff unten in die Füllkörperkolonne geleitet wird, so daß das im Teilstrom nicht gelöste Gas in der Füllkörperkolonne aufsteigt und in dem Abwasser gelöst wird. Das Gas und das zu behandelnde Abwasser werden daher in der Füllkörperkolonne im Gegenstrom geführt. Ein Wasserstrahl-Gasverdichter für sich allein erzeugt jedoch keine so kleine Gasblasen, wie sie durch die erfindungsgemäßen Ausführungsformen erzeugt werden.

Die DE-OS 35 25 861 offenbart zwar die Verwendung einer Kreiselpumpe zur Erzeugung von Gasblasen von 0,1 - 0,5 mm Durchmesser (Spalte 3, Zeile 23) jedoch wird damit ein Eiweisabschäumer betrieben, in dem sich die Gasbläschen an Eiweisfragmente und andere unerwünschte Schwebeteilchen anlagern und diese Teilchen zur Wasseroberfläche führen. Die von der Kreiselpumpe erzeugten Gasbläschen dürfen jedoch nicht zu klein sein, weil sie sonst den Schwebeteilchen, an die sie sich anlagern, nicht den gewünschten Auftrieb vermitteln.

Bei Ausführungsformen der Erfindung ist sowohl eine feine Verteilung des Behandlungsgases durch Hinzugabe eines Tensids als auch durch die Verwendung einer Seitenkanalpumpe vorgesehen.

Wird zur feinen Verteilung des Behandlungsgases das Tensid verwendet, so kann die Pumpenanordnung auch aus einer Förderpumpe bestehen, der eine Strahlpumpe nachgeschaltet ist, durch die der Teilstrom hindurchgeleitet wird und an deren Ansaugseite das Behandlungsgas zugeführt wird. Auch hier ist an der Ansaugseite der Strahlpumpe ein kräftiger Unterdruck vorhanden, der zu der gewünschten sehr feinen Verteilung des Gasstromes und dem zu behandelnden Abwasser führt.

Es ist durchaus möglich, die Anlage so zu betreiben, daß bei einem Durchgang des Behandlungsgases durch das Abwasser das Behandlungsgas vollständig mit dem Abwasser reagiert und daher am oberen Ende des Behälters kein Gas aus dem Wasserspiegel austritt. Bei einer anderen Ausführungsform, insbesondere wenn Luft in dem Behandlungsgas enthalten ist, bildet sich am oberen Ende des Behälters ein Gaskissen, von dem eine mit dem Abwasser nicht reagierende gasförmige Beimischung zum Behandlungsgas, beispielsweise Luft und gegebenenfalls auch nicht verbrauchtes Behandlungsgas abgeführt wird. In jedem Fall ist es vorteilhaft, den Anteil der wirksamen Komponente im Behandlungsgas möglichst groß zu halten, also beispielsweise ein Ozon-Luftgemisch mit dem maximal möglichen Ozongehalt zu verwenden.

Die Verhältnisse können so gewählt sein, daß ein einziger Behälter zur Behandlung des Abwassers ausreicht. Um eine vollständige Ausnutzung des Behandlungsgases zu gewährleisten, können jedoch auch mindestens zwei derartige Behälter hintereinander geschaltet sein, wobei der zweite Behälter bei einer Weiterbildung dieser Ausführungsform der Erfindung mit einer zweiten Pumpenanordnung mit Seitenkanal in der gleichen Weise zusammenarbeitet wie bei dem erstgenannte Behälter. Bei einer Ausführungsform der Erfindung wird dann das im ersten Behälter nicht verbrauchte Behandlungsgas zusammen mit Abwasser-Gas-Gemisch dem Seitenkanal der Pumpenanordnung des zweiten Behälters zugeführt. Bei Bedarf können auch mehr als zwei derartige Behälter hintereinander geschaltet sein, wobei jeweils der Ausgang des Abwassers des vorhergehenden Behälters mit dem Eingang des Abwasser im folgenden Behälter verbunden ist. Bei einer bevorzugten Ausführungsform der Erfindung sind zwei Behälter übereinander und bei einer anderen drei Behälter nebeneinander angeordnet.

Bei einer Ausführungsform der Erfindung weist die Anordnung noch eine Vorrichtung auf, die den pH-Wert des Abwassers in einem bestimmten Bereich konstant hält. Auch kann der Behälter eine Temperiervorrichtung enthalten, die das Abwasser auf einer bestimmten Temperatur hält. Sowohl pH-Wert als auch Temperatur hängen von der Art des Schadstoffes oder der Schadstoffe ab, die das Abwasser enthält und auch von der Natur des Behandlungsgases.

Eine wichtige, zur Überwachung des Erfolges der Abwasserbehandlung geeignete Große ist das Redoxpotential. Deshalb ist bei einer bevorzugten Ausführungsform der Erfindung eine Vorrichtung vorgesehen, die durch Variation der zugeführten Menge des Behandlungsgases das Redoxpotential des den Behälter verlassenden Abwassers konstant hält.

Schließlich kann bei einer Ausführungsform der Erfindung an einer Austrittsöffnung des Behandlungsgases aus dem bezüglich des Stromes des Behandlungsgases letzten Behälter eine Vorrichtung angeordnet sein, die in Abhängigkeit von Menge und/oder Bestandteilen des austretenden Behandlungsgases Befehle für die Steuerung der Anordnung und/oder Warnsignale abgibt. Mit Hilfe einer solchen Vorrichtung ist es möglich, einem Abwasser mit sich änderndem Schadstoffgehalt stets nur die zur Ausfällung der Schadstoffe erforderliche Menge des Behandlungsgases zuzuführen. Tritt zu viel ungenutztes Behandlungsgas aus, so kann mit Hilfe dieser Vorrichtung die Zufuhr des Behandlungsgases gedrosselt werden. Die geringe Menge der eingeleiteten Tenside wird durch das Behandlungsgas, insbesondere von Ozon, praktisch völlig beseitigt und ist daher ökologisch völlig unbedenklich, jedoch für den Erfolg der Behandlung des Abwassers von größtem Nutzen.

Weitere Merkmale der Erfindung ergeben sich aus der folgenden Beschreibung einer Ausführungsform der erfindungsgemäßen Anlage in Verbindung mit den Ansprüchen und der Zeichnung.

Die einzelnen Merkmale können je für sich oder zu mehreren bei Ausführungsformen der Erfindung verwirklicht sein.

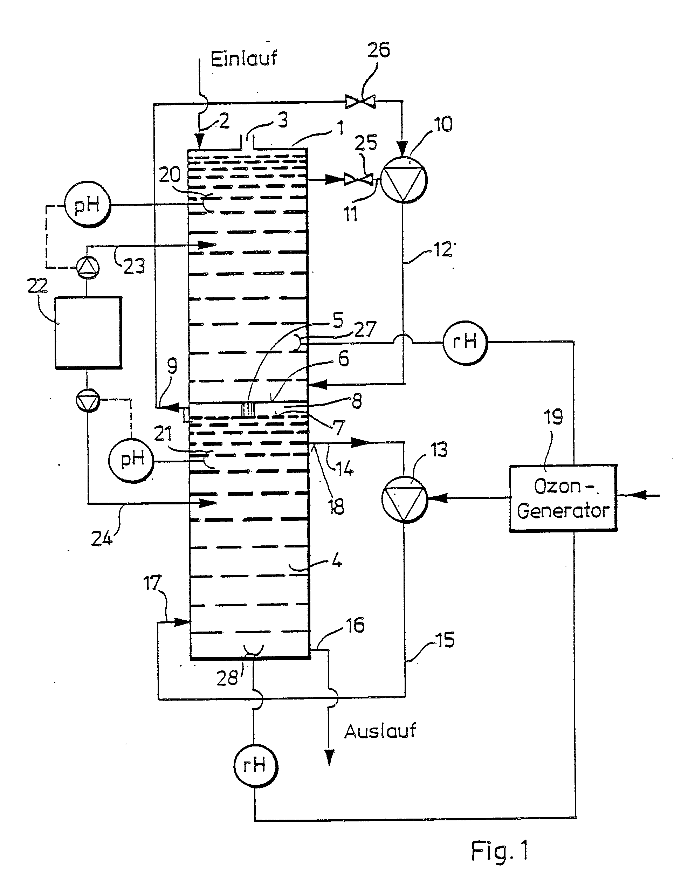

Die Fig. 1 bis 3 der Zeichnung zeigen schematisch je eine Ausführungsform der erfindungsgemäßen Anlage.

Die in Fig. 1 der Zeichnung dargestellte Anlage weist einen oberen Behälter 1 auf, in dem oben ein Einlauf 2 für das zu behandelnde Abwasser vorgesehen ist. Der Behälter ist nahezu geschlossen. Er weist lediglich in seinem Deckel eine Öffnung 3 auf, durch die Luft und ggf. nicht vollständig vorhandenes Behandlungsgas entweichen kann. Der Behälter 1 ist oben auf einen unteren Behälter 4 aufgesetzt, den er oben luftdicht abschließt. Ein Fallrohr 5 führt vom unteren Ende des Behälters 1 in das obere Ende des Behälters 4 ein. Das untere Ende des Fallrohres 5 endet in einem Abstand von dem den Behälter 4 abschließenden Boden 6 des Behälters 1, so daß sich über dem Wasserspiegel 7 des unteren Behälters 4 ein Gaskissen 8 bilden kann. Vom oberen Ende des unteren Behälters 4 führt eine Saugleitung 9 zu einer Seitenkanalpumpe 10, die ein Wasser-Gas-Gemisch vom Gaskissen 8 und über die Saugleitung 11 Wasser vom oberen Teil des oberen Behälters 1 ansaugt. Die Druckseite der Seitenkanalpumpe 10 ist über eine Leitung 12 mit dem unteren Ende des Behälters 1 verbunden.

In gleicher Weise ist die Saugseite einer Seitenkanalpumpe 13 über eine Leitung 14 mit dem oberen Abschnitt des Behälters 4 verbunden. Die Druckseite der Seitenkanalpumpe 13 ist über eine Leitung 15 mit der unteren Hälfte des Behälters 4 verbunden. Das behandelte Abwasser wird über eine Leitung 16 der weiteren Verwendung zugeführt. Der Einlauf 17 der Leitung 15 liegt oberhalb des Auslaufes 16 für das Abwasser. Die Stelle 18, an der ein Teilstrom des Abwassers vom Behälter 4 abgezogen wird, liegt unterhalb des Wasserspiegels 7. Die Saugseite der Seitenkanalpumpe 13 ist außer über die Leitung 14 mit dem Behälter 4 noch mit einem Ozongenerator 19 verbunden, der ein Ozon-Luftgemisch der Saugseite der Seitenkanalpumpe 13 zuführt. Dabei ist ein möglichst großer Ozongehalt des Ozon-Luftgemisches anzustreben. In beiden Behältern 1 und 4 sind Meßstellen 20 und 21 vorgesehen, die den pH-Wert des Abwassers in diesen Behältern messen und ein Gerät 22 steuern, das über Zuleitungen 23 und 24 Lauge oder Säure dem Abwasser zuführt und dadurch auf einen bestimmten pH-Wert einstellt. Außerdem sind in den unteren Teilen der Behälter 1 und 4 Redox-Elektroden 27 bzw. 28 angeordnet, deren Ausgangssignale den mit entsprechenden Regeleinrichtungen versehenen Ozon-Generator 19 dazu veranlassen, den Behältern 1 und 4 eine solche Menge Ozon zuzuführen, daß die Redoxpoteniale auf vorgegebenen Werten gehalten werden.

Bei der in Fig. 1 dargestellten Ausführungsform der Erfindung entnehmen die Seitenkanalpumpen 10 und 13 aus den Behältern 1 bzw. 4 jeweils einen Teilstrom, dem sie das Behandlungsgas beimischen, das in sehr fein verteilter Form in dem dem Behälter unten wieder zugeführten Teilstrom enthalten ist. Bei dem dargestellten Ausführungsbeispiel wird der dem unteren Behälter 4 zugeordneten Pumpe 13 Ozon zugeführt, während die dem oberen Behälter zugeordnete Pumpe das Behandlungsgas dem Gaskissen 8 des unteren Behälters 4 in Form eines Wasser-Gas-Gemisches entnimmt. Die beiden Teilströme in den Saugleitungen 9 und 11 können mit den Ventilen 25 und 26 eingestellt werden. Das Behandlungsgas steigt in den Behältern 1 und 4 auf. In dem Gaskissen 8 wird das sich oben sammelnde Behandlungsgas in Form eines Wasser-Gas-Gemisches abgesaugt und durch die Seitenkanalpumpe 10 mit dem Teilstrom des oberen Behälters 1 in diesen unten eingeführt. Die in dem Ozon-Luftgemisch enthaltene, mit dem Abwasser nicht reagierende Luft tritt dann am oberen Ende des oberen Behälters 1 durch die Öffnung 3 aus.

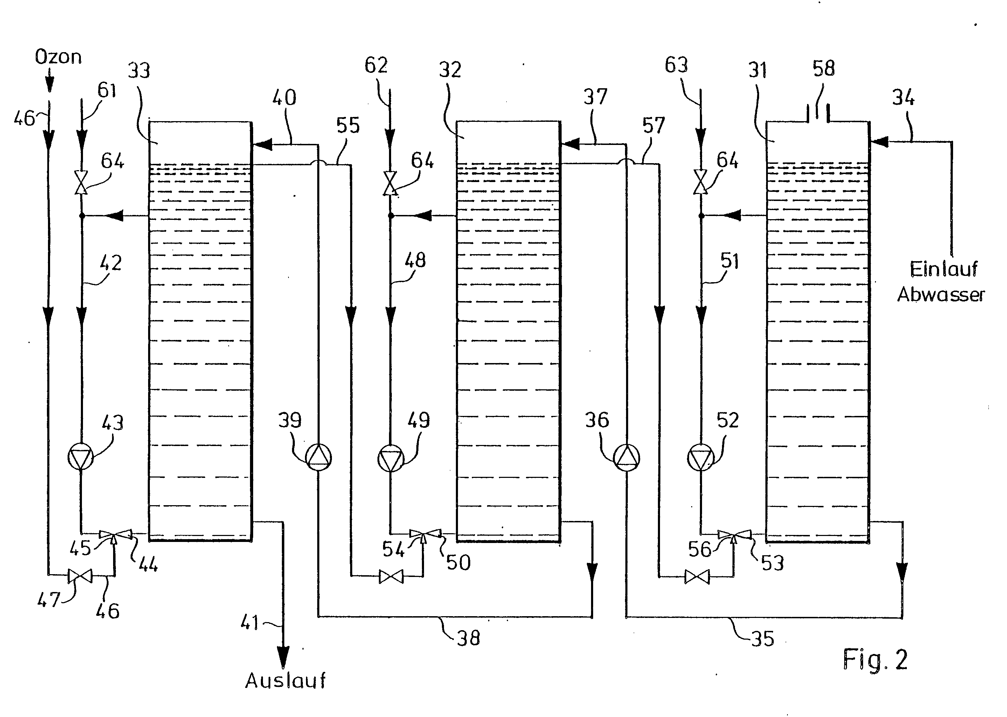

Fig. 2 zeigt als weiteres Ausführungsbeispiel der Erfindung eine Anlage, bei der drei Behälter 31, 32, 33 hintereinander geschaltet sind. Diese Behälter sind nicht übereinander, sondern nebeneinander angeordnet. Dem in Fig. 2 rechten Behälter 31 wird wiederum am oberen Ende über einen Einlauf 34 das zu behandelnde Abwasser zugeführt. Das den Behälter von oben nach unten durchströmende Abwasser wird vom unteren Ende dieses Behälters 31 über eine Leitung 35, in der sich eine Pumpe 36 befindet, dem Einlauf 37 des in der Reihenschaltung nächsten Behälters 32 zugeführt. Ebenso ist auch das untere Ende des Behälters 32 über eine Leitung 38, die eine Pumpe 39 enthält, mit dem Einlauf 40 am oberen Ende des in der Reihenschaltung letzten Behälters 33 verbunden. Dieser letzte Behälter 33 weist an seinem unteren Ende einen Auslauf 41 auf, durch den das behandelte Abwasser die Anlage verläßt und der weiteren Verwendung zugeführt wird.

Ebenso wie bei der Ausführungsform nach Fig. 1 wird auch bei der Anlage nach Fig. 2 durch das Abwasser ein Behandlungsgas im Gegenstrom hindurchgeleitet. Zu diesem Zweck ist der in Strömungsrichtung des Abwassers letzte Behälter 33 mit einer Leitung 42 versehen, die eine nahe dem oberen Ende des Behälters 33 angeordnete Stelle mit einer nahe dem Boden des Behälters angeordnete Stelle verbindet. In dieser Umgehungsleitung 42 befinden sich hintereinander eine normale Förderpumpe 43 und eine Strahlpumpe 44. Die Förderpumpe 43 erzeugt einen Teilstrom des im Behälter 33 enthaltenen Abwassers von dessen oberem Ende zu dessen unterem Ende, so daß dieser Teilstrom dem Hauptstrom des Abwassers im Behälter 33 entgegengesetzt ist. Mittels der Förderpumpe 43 wird das durch die Leitung 42 umgewälzte Abwasser durch die Strahlpumpe 44 gepreßt, so daß an deren einen Seitenkanal bildenden Ansaugstutzen 45 ein Unterdruck entsteht, der das Einleiten und Vermischen des Behandlungsgases, bei dem es sich wiederum um Ozon handeln kann, mit dem Abwasser begünstigt. Demgemäß ist an den Ansaugstutzen 45 der Strahlpumpe 44 eine Leitung 46 zum Zuführen von Ozon angeschlossen, die ein Ventil 47 zum Dosieren und gegebenenfalls völligen Absperren des Ozons enthält.

Eine ähnliche Umgehungsleitung 48 mit einer Pumpenanordnung, die aus einer Förderpumpe 49 und einer Strahlpumpe 50 besteht, ist auch an dem Behälter 32 angebracht, und es weist auch der Behälter 31 eine entsprechende Umgehungsleitung 51 mit Förderpumpe 52 und Strahlpumpe 53 auf. Ähnlich wie bei der Ausführungsform nach Fig. 1 wird dem Ansaugstutzen 54 der dem zweiten Behälter 32 zugeordneten Strahlpumpe 50 nicht frisches Ozon, sondern ein vom oberen Ende des ersten Behälters über eine Leitung 55 abgesaugtes Ozon/Wasser-Gemisch zugeführt. Das gleiche gilt auch für die Pumpenanordnung am Behälter 31, deren Ansaugstutzen 56 der Strahlpumpe 53 über eine Leitung 57 mit dem oberen Ende des in Bezug auf den Strom des Behandlungsgases vorhergehenden Behälters 32 verbunden ist. Während die Behälter 32 und 33 an ihrem oberen Ende geschlossen sind, so daß sich dort unverbrauchtes Behandlungsgas ansammeln kann, ist der Behälter 31 an seinem oberen Ende mit einer Öffnung 58 versehen, durch die überschüssiges Behandlungsgas entweichen kann.

Die Wirkungsweise dieser Anlage ist im wesentlichen die gleiche wie die Wirkungsweise der Anlage nach Fig. 1. Unterschiede bestehen im wesentlichen lediglich darin, daß bei der Anlage nach Fig. 2 drei nebeneinander angeordnete Behandlungsbehälter statt zwei übereinander angeordnete Behälter verwendet werden und daß die das Umwälzen eines Teilstromes des Abwassers bewirkende Pumpenanordnung nicht aus einer Seitenkanalpumpe besteht, sondern aus einer Förderpumpe und einer der Förderpumpe nachgeschalteten Strahlpumpe, deren Ansaugstutzen den Seitenkanal bildet, an dem das Behandlungsgas zugeführt wird.

Es versteht sich, daß auch die Anordnung nach Fig.2 auf das Redox-Potential ansprechende Regeleinrichtungen und Einrichtungen zum Messen und Einstellen des pH-Wertes aufweisen kann. Als Besonderheit ist bei der Anlage nach Fig. 2 an die die Teilströme des Abwassers führenden Leitungen 42, 48, 51 jeweils eine Leitung 61, 62, 63 mit einem Ventil 64, 65, 66 angeschlossen, die es ermöglicht, dem der Pumpenanordnung zuströmenden Abwasser eine geringe Menge an Tensiden zuzudosieren. Diese Menge liegt im Bereich von einigen ppm und ist daher so gering, daß sie mittels des Behandlungsgases ohne weiteres abgebaut wird. Das Hinzufügen einer derart geringen Menge an Tensiden bewirkt jedoch eine bedeutende Verbesserung der Verteilung des Behandlungsgases und erhöht damit die Wirksamkeit der Anlage in weitaus stärkerem Maße als die Wirksamkeit durch den Einsatz von an sich schädlichen Tensiden beeinträchtig wird.

Die dargestellten Ausführungsbeispiele können nach den Regeln des Anlagenbaus in vielfältiger Weise abgewandelt werden. So kann z.B. bei der Ausführungsform nach Fig. 2 das Flüssigkeitsniveau in den in Strömungsrichtung aufeinanderfolgenden Behältern 31 bis 33 abnehmen, so daß ein natürlicher Überlauf von dem einen Behälter zum nächsten stattfindet und die Förderpumpen 36 und 39 eingespart werden können. Der Auslauf am letzten Behälter 33 wird dann vorzugsweise als Schwanenhals ausgebildet, der das obere Niveau im Behälter bestimmt.

Wird, wie bei den dargestellten Ausführungsbeispielen vorausgesetzt, ein Ozon-Luftgemisch als Behandlungsgas verwendet, so reagiert das Ozon mit in dem Abwasser vorhandenen Schadstoffen, insbesondere Schwermetallen, Ethylenaminen, Cyaniden, chlorierten Kohlenwasserstoffen, Tensiden, organischen Komplexbildnern wie Ethylendiamintetraacetat und dergleichen. Das Abwasser wird daher in diesen Anlagen in einfacher und vorteilhafter Weise bei Verwendung von der gerade für die Oxidation der Schadstoffe erforderlichen Menge Ozon gereinigt. Dabei besteht die Möglichkeit, in der Öffnung 3 des Deckels des oberen Behälters der Anlage nach Fig. 1 oder entsprechend in der Öffnung 58 des Behälters 31 der Ausführungsform nach Fig. 2 einen Ozonsensor anzuordnen, der ein Signal abgibt, wenn die durch diese Öffnung entweichende Menge an Ozon einen vorgegebenen Betrag über oder unterschreitet. Bei diesem Signal kann es sich entweder um ein Warnsignal oder auch um ein Steuersignal für die Ozondosierung handeln. Eine Regelung der Ozondosierung in Abhängigkeit von der den Ausgang des in Strömungsrichtung des Ozons letzten Behälters erreichenden Ozonmenge kann ggf. die Regelung der Ozondosierung in Abhängigkeit vom Redoxpotential ersetzen. Die Erfindung erlaubt es dabei, das Ozon in derart hohen Konzentrationen in das Abwasser einzuleiten, daß die Beseitigung sämtlicher Verunreinigungen durch eine solche Behandlung möglich ist.

Anstelle eines Ozon-Luftgemisches können aber auch andere Behandlungsgase verwendet werden. Da die Kosten für die Ozon-Erzeugung beträchtlich sind, kann in vielen Fällen ein zweistufiges Verfahren nützlich sein, bei dem zuerst für die Beseitigung des größten Anteiles der Verunreinigungen ein billiges Behandlungsgas verwendet und dann der erforderliche Reinheitsgrad durch eine Behandlung des vorbehandelten Wassers mit Ozon erreicht wird. Wesentlich ist, daß durch die Pumpenanordnungen mit Seitenkanal das Behandlungsgas äußerst fein verteilt wird und daher der Teilstrom, der den Behältern entnommen wird, mit dem Behandlungsgas sehr stark angereichert wird und in den Behältern langsam nach oben strömen kann, wogegen das Abwasser von oben nach unten strömt. Ist das Behandlungsgas beim Durch strö men des Behälters bereits vollständig verbraucht, so wird dem Seitenkanal der Pumpenanordnung wieder frisches Behandlungsgas zugeführt. Ist das im Luftkissen sich sammelnde Behandlungsgas nur zum Teil verbraucht, so kann der Pumpenanordnung bei Bedarf soviel frisches Behandlungsgas zugeführt werden, daß die Gesamtmenge des Behandlungsgases ausreicht, um die im Behälter befindliche Abwassermenge bis zu dem gewünschten Grad zu reinigen. Das im jeweiligen Behälter teilweise gereinigte Abwasser fließt dann in den nächsten Behälter und wird dort auf den gewünschten Reinheitsgrad gebracht.

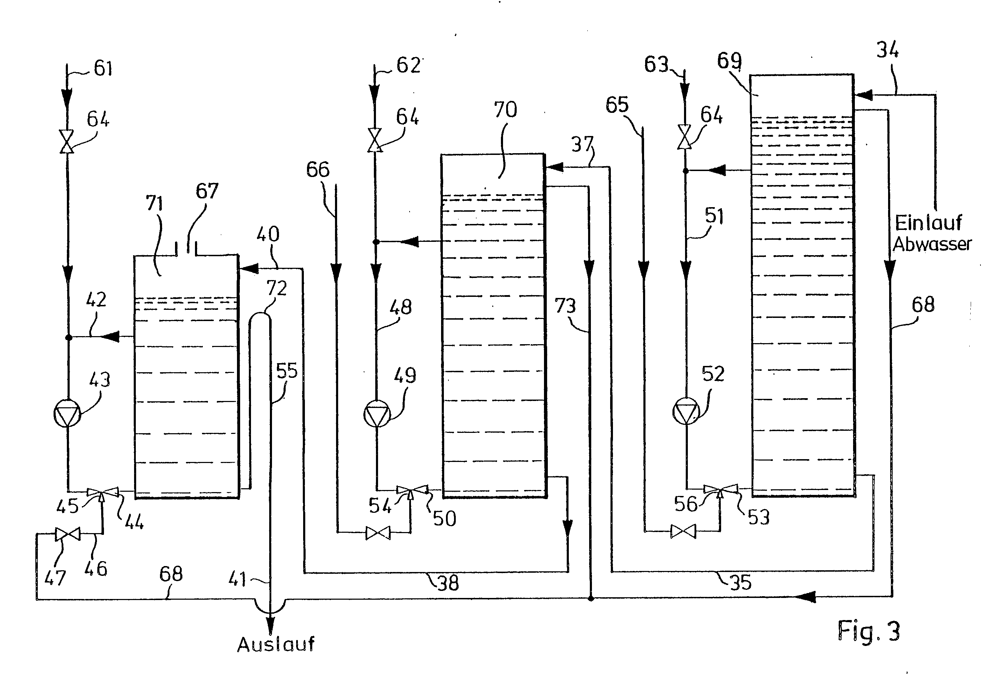

Bei der in Fig. 3 dargestellten Ausführungsform der Erfindung können die Pumpen 36 und 39 entfallen. Die drei Kessel 69, 70 und 71 weisen eine verschieden hohe Wassersäule auf, der Kessel 69 die höchste, der Kessel 70 die zweithöchste und der Kessel 71 die niedrigste Wassersäule. Das zu reinigende Wasser läuft dann über die Leitung 35 von selbst zu dem Einlauf 37 oben am Kessel 70, der niedriger ist als der Kessel 69. Das noch weiter zu reinigende Wasser aus dem Kessel 70 läuft durch an seinem unteren Ende vorgesehenen Ablauf über die Leitung 38 in den Einlauf 40 am oberen Ende des wiederum kleiner als der Kessel 70 gebauten Kessels 71. Der Auslauf 41 aus dem unteren Ende des Kessels 71 ist nach Art eines Schwanenhalses 72 ausgebildet, der einen bestimmten Wasserstand im Kessel 71 gewährleistet.

Auch in den Leitungen 35 und 38 können Schwanenhälse eingebaut sein, die in den Kesseln 89 und 70 einen bestimmten Wasserstand aufrechterhalten. Auch können gleich hohe Behälter verwendet werden, die auf verschieden hohen Podesten stehen, der Kessel 69 auf dem höchsten, der Kessel 71 auf dem niedrigsten Podest.

Die Ausführungsform nach Fig. 3 unterscheidet sich von der Ausführungsform nach Fig. 2 auch dadurch, daß das reine Ozon den unteren Enden der Kessel 69 und 70 über die Leitungen 65 und 66 parallel zugeführt wird. Der Kessel 69 ist oben geschlossen. Aus dem Raum oberhalb der Wassersäule in den Kesseln 69 und 70 wird über die Leitungen 68 und 73 ein Ozon-Wassergemisch abgesaugt und über das einstellbare Ventil 47 und die Leitung 46 der Saugseite der Wasserstrahlpumpe 44 zugeführt, die dieses zum Teil unverbrauchte Ozon aus den Kesseln 69 und 70 dem unteren Ende des Kessels 71 zuführt. Bei der in Fig. 3 dargestellten Führung des Ozons ist dessen Verbrauch geringer als bei der Ozon-Führung in der Anlage nach Fig. 2.

In den Kesseln 33 und 71 kann noch eine Redoxelektrode enthalten sein, die in dem Ausführungsbeispiel nach Fig. 1 mit 27 und 28 bezeichnet ist.

Außerdem kann die aus den Öffnungen 58 und 67 entweichende Menge gemessen werden und von dieser Meßvorrichtung ein Warnsignal oder aber ein Steuersignal für die Ozondosierung abgegeben werden, so daß bei sich änderndem Schadstoffgehalt des Abwassers das Ozon stets optimal dosiert werden kann.

Wie bereits oben erwähnt, kann eine kleine Menge Tenside durch die Leitungen 61, 62 und 63 dem Abwasser hinzugegeben werden, so daß die Gasblasen in allen drei Kesseln besonders fein verteilt werden.

Anstelle der Wasserstrahlpumpen 44, 50, 53 können auch Seitenkanalpumpen vorgesehen sein, so daß sich in Verbindung mit dem Tensid eine besonders feine Verteilung des Behandlungsgases ergibt.

## Ansprüche

1. Anordnung zur Behandlung von Industrieabwässern mit einem gasförmigen Medium, vorzugsweise mit Ozon, in einem Behälter, dadurch gekennzeichnet, daß eine Vorrichtung vorgesehen ist, die dem Abwasser eine geringe, vorzugsweise im Bereich von einigen ppm liegende Menge an Tensiden zudosiert.

2. Anordnung nach Anspruch 1, dadurch gekennzeichnet, daß die Menge der hinzudosierten Tenside 2 - 10 mg pro Liter Abwasser beträgt.

3. Anordnung zur Behandlung von Industrieabwässern mit einem gasförmigen Medium, vorzugsweise mit Ozon, in mindestens einem Behälter (1) mit einer Pumpenanordnung (13) die einen Teilstrom (14, 15) des Abwassers in der Nähe des am oberen Behälterende befindlichen Wassereinlaufes (5) entnimmt und in der Nähe seines am unteren Behälterende befindlichen Abwasserauslaufes (16) wieder zuführt, dadurch gekennzeichnet, daß die Pumpenanordnung von einer Seitenkanalpumpe (13) gebildet ist, an deren Ansaugseite das Behandlungsgas zugeführt ist.

4. Anordnung nach Anspruch 1 oder 2, dadurch gekennzeichnet, daß eine Pumpenanordnung (43, 44) einen Teilstrom (14, 15) des Abwassers in der Nähe des am oberen Behälterende befindlichen Abwassereinlaufes (5, 40) entnimmt und in der Nähe seines am unteren Behälterende befindlichen Abwasserauslaufes (16, 41) wieder zuführt, und daß die Pumpenanordnung eine Förderpumpe (43) und eine ihr nachgeschaltete Strahlpumpe (44) umfaßt, durch die der Teilstrom hindurchgeleitet wird und an deren Ansaugseite (45) das Behandlungsgas zugeführt wird.

5. Anordnung nach einem der vorhergehenden Ansprüche, dadurch gekennzeichnet, daß mindestens zwei derartige Behälter (1, 4; 31, 32, 33) hintereinandergeschaltet sind.

6. Anordnung nach einem der vorhergehenden Ansprüche, dadurch gekennzeichnet, daß am oberen Ende des einen Behälters (4; 33) sich ein Gaskissen (8) befindet, von dem nicht verbrauchtes Behandlungsgas in einer Saugleitung (9; 55) über die Saugseite der dem anderen Behälter (1; 32) zugeordneten Pumpenanordnung (10; 49, 50) in den unteren Teil des anderen Behälters (1; 32) eingeführt wird.

7. Anordnung nach Anspruch 5, dadurch gekennzeichnet, daß die beiden Behälter (1, 4) übereinander angeordnet ·sind und das vom oberen Ende des unteren Behälters (4) ·abgeführte Behandlungsgas der im Teilstrom (11, 12) des oberen Behälters (1) eingeschalteten Pumpenanordnung (10) zugeführt ist.

8. Anordnung nach einem der vorhergehenden Ansprüche, dadurch gekennzeichnet, daß eine Vorrichtung (22) vorgesehen ist, die den pH-Wert des Abwassers in einem bestimmten Bereich konstant hält.

9. Anordnung nach einem der vorhergehenden Ansprüche, dadurch gekennzeichnet, daß eine Vorrichtung (27, 28, 19) vorgese hen ist, die durch Variation der zugeführten Menge des Behandlungsgases das Redoxpotential des den Behälter (4) verlassenden Abwassers konstant hält.

10. Anordnung nach einem der vorhergehenden Ansprüche, dadurch gekennzeichnet, daß bei drei bezüglich des Abwasserstromes hintereinander geschalteten Behältern (69, 70, 71) den beiden ersten Behältern (69, 70) frisches Ozon zugeführt wird, wogegen aus den Gaskissen am oberen Ende der beiden ersten Behälter (69, 70) entnommenes, nicht verbrauchtes Behandlungsgas dem unteren Ende des dritten Behälters (71) zugeführt ist.

11. Anordnung nach einem der Ansprüche 1 bis 6 und 8 bis 10, dadurch gekennzeichnet, daß Behälter abnehmender Größe hinsichtlich des Abwasserstromes hintereinander geschaltet sind und der Auslauf mindestens des letzten Behälters (71) über einen Schwanenhals (72) erfolgt.

12. Anordnung nach einem der vorhergehenden Ansprüche, dadurch gekennzeichnet, daß an einer Austrittsöffnung (58, 67) des Behandlungsgases aus dem bezüglich des Stromes des Behandlungsgases letzten Behälter eine Vorrichtung angeordnet ist, die in Abhängigkeit von Menge und/oder Bestandteilen des austretenden Behandlungsgases Befehle für die Steuerung der Anordnung und/oder Warnsignale abgibt.

Fig. 1

Fig. 2

Einlauf Abwasser

Auslauf

Ozon

EP 0 328 035 A2

Fig. 3